# EUROPEAN PATENT APPLICATION

(11) **EP 1 742 150 A1**
(43) Date of publication of application: **10.01.2007**
(21) Application number: 06116608.8
(22) Date of filing: 05.07.2006
(51) Int. Cl.: G06F 9/445

(54) **Computer system and method for selectively installing of operating system amonf a plurality of operating systems**

(30) Priority: 08.07.2005 KR 2005061834
(71) Applicant: Samsung Electronics Co., Ltd., Suwon-si 442-742 Gyeonggi-Do (KR)
(72) Inventor: Joo, Soo-yeun, Seongnam-si Gyeonggi-do (KR); Cho, Keon-young, Gyeonggi-do (KR); Shin, Dai-young, Giheung-gu Yongin-si Gyeonggi-do (KR)
(74) Representative: Robinson, Ian Michael

(57) **Abstract**

A computer system (100) for selectively installing an operating system from a plurality of operating systems (111, 112, 113) is provided with an operating system storage unit (110) for storing a plurality of operating systems (111, 112, 113); a selection/installation unit (120) for selecting and installing a specified operating system from the stored operating systems; a deletion unit (130) for disabling the operating systems not selected by the selection/installation unit (120) among the stored operating systems; and an install information storage unit (140) for storing information about the installed operating system.

## Description

The present invention relates to a computer system, and more particularly to a computer system and a method of selectively installing an operating system (OS) among a plurality of operating systems.

In order to operate a computer system, such as a personal computer (PC) or a notebook computer, an operating system (OS), such as Apple Mac OS, Microsoft Windows™ (Windows 95, Windows XP or Windows 2000), NEXTSTEP, Unix, Linux, and others, is required. Such an operating system (OS) may be available in different versions and/or different languages. Conventionally, a computer system is packaged or pre-installed with an operating system (OS). A computer system manufacturer or reseller typically provides such an operating system (OS) having a version and language for which the manufacturer or reseller is bound by a copyright contract. However, the language or version of the operating system (OS) pre-installed by the manufacturer or reseller may be different from the version or language of the operating system (OS) that a user actually desires in the computer system. This may create an inconvenience and is not optimal for consumers.

One solution is to provide two or more operating systems (OS) in different versions and languages in the computer system. However, providing multiple operating systems (OS) and enabling a user to selectively install a desired operating system (OS) is not cost efficient and increases the likelihood of copyright violations.

In order to solve these problems, a technique of setting image files of operating systems (OS) in several languages and executing an image of an operating system (OS) according to a specified language has been proposed, as described in U.S. Patent Publication Application No. 2003-0097554. However, this technique requires a plurality of operating system images to be installed, and provides a different language according to a user's selection. Accordingly, this technique is not suitable to a user environment where only one language is used. In addition, in order to provide operating system images related to a plurality of languages with respect to a single computer system, the cost for the plurality of operating systems must be incurred, which is not economical. Further, in consideration of the fact that most operating systems (OS) are set differently according to computer systems and such set information should be maintained, it is not efficient to make a plurality of operating systems (OS) coexist in a single computer system to provide multi-language support.

According to the present invention there is provided an apparatus and method as set forth in the appended claims. Preferred features of the invention will be apparent from the dependent claims, and the description which follows.

Various aspects and example embodiments of the present invention provide a plurality of operating systems (OS) in a computer system and enable a user to select and install one operating system among the provided operating systems.

Other aspects and embodiments of the present invention are provided to protect copyrights of operating systems that have not been installed among a plurality of operating systems, while providing a user convenience in installation.

Additional advantages, objects, and features of the invention will be set forth in part in the description which follows and in part will become apparent to those having ordinary skill in the art upon examination of the following or may be learned from practice of the invention.

In accordance with an embodiment of the present invention, a computer system for selectively installing an operating system from a plurality of operating systems comprises: an operating system storage unit for storing a plurality of operating systems; a selection/installation unit for selecting and installing a specified operating system among the stored operating systems; a deletion unit for disabling the operating systems not selected by the selection/installation unit among the stored operating systems; and an install information storage unit for storing information about the installed operating system.

In accordance with another aspect of the present invention, there is provided a method of selectively installing an operating system among a plurality of operating systems, which comprises: providing a storage medium in which a plurality of operating systems are stored; selecting an operating system to be installed among the plurality of operating systems in a computer system; installing the selected operating system in the computer system; and deleting the operating systems not selected among the plurality of operating systems.

In accordance with still another aspect of the present invention, there is provided a method of selectively installing an operating system from a plurality of operating systems, which comprises: preparing and providing a storage medium in which a plurality of operating systems are stored; selecting an operating system to be installed among the plurality of operating systems in a computer system; installing the selected operating system in the computer system; and setting that the unselected operating systems could not be installed.

In addition to the example embodiments and aspects as described above, further aspects and embodiments of the present invention will be apparent by reference to the drawings and by study of the following descriptions.

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:
Figure 1 is a block diagram of an example computer system according to an embodiment of the present invention;
Figure 2 is a view of an example user interface for enabling a user to select an operating system to be installed according to an embodiment of the present invention;
Figure 3 is a flowchart of a process of installing an operating system according to an embodiment of the present invention;
Figure 4 is a flowchart of a process of installing or restoring an operating system in a computer system through a storage medium such as a CD-ROM or a DVD according to another embodiment of the present invention; and
Figure 5 is a flowchart of a process of selecting and installing one of two types of operating systems according to an embodiment of the present invention.

Hereinafter, example embodiments of the present invention will be described with reference to the accompanying drawings illustrating block diagrams and flowcharts for explaining a computer system, storage device and method of selectively installing a specified operating system from a plurality of operating systems. It will be understood that each block of the flowchart illustrations, and combinations of blocks in the flowchart illustrations, can be implemented by computer program instructions. These computer program instructions can be provided to a processor of a general purpose computer, a special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer system or other programmable data processing apparatus to function in a particular manner, such that the instructions stored in the computer usable or computer-readable memory produce an article of manufacture including instruction means that implement the function specified in the flowchart block or blocks. The computer program instructions may also be loaded into a computer system or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

In addition, each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

In the description, an operating system stored in a storage medium includes an operating system that can be actually driven, and files that should be installed to be driven. Here, the files include operating system image files that are stored in a CD-ROM, a hard disk, and others, to be installed.

In the embodiment of the present invention, the term "unit", that is, "module" or "table", as used herein, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and configured to execute on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented so as to execute one or more CPUs in a computer system.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

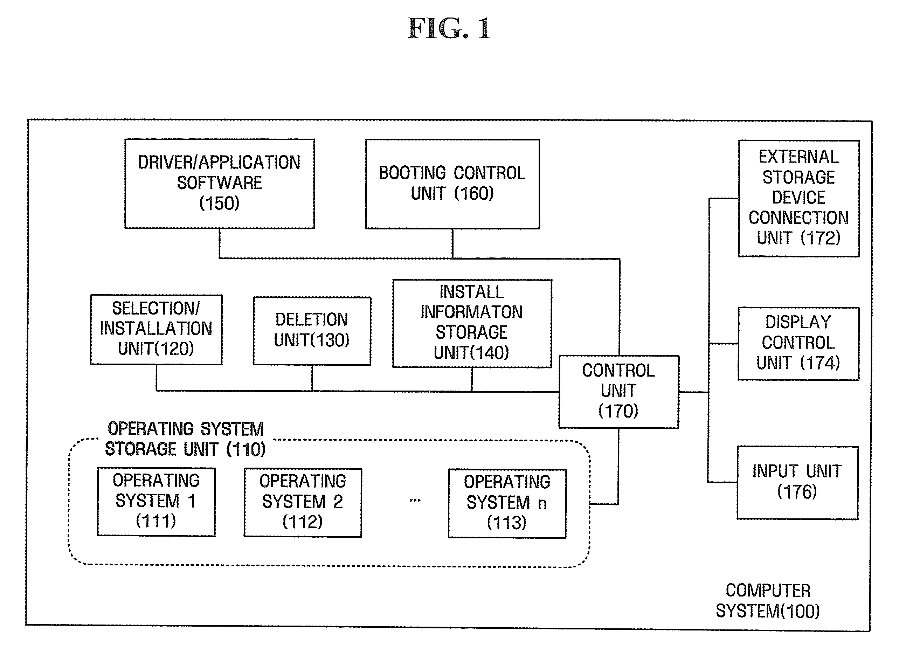

Turning now to Figure 1, a block diagram of an example computer system according to an embodiment of the present invention is illustrated. As shown in Figure 1, the computer system 100 comprises an operating system storage unit 110, a selection/installation unit 120, a deletion unit 130, an install information storage unit 140, a driver/application software 150, a booting control (operating system) unit 160, a control unit 170, an external storage device connection unit 172, a display control unit 174, an input unit 174.

An operating system storage unit 110 can be a storage device, such as a hard disk and/or a flash memory, arranged to store a plurality of operating systems 111, 112, and 113. The selection/installation unit 120, the deletion unit 130, the install information storage unit 140, the driver/application software 150, and the booting operating system unit 160 can be stored in the computer system 100. For example, the selection/installation unit 120, the deletion unit 130, the drive/application software 150, and the booting operating system unit 160 can be stored in a storage device such as the operating system storage unit 110 so as to proceed to install.

The install information storage unit 140 may be stored in the storage device; however, if the storage device is detachable from the computer system 100, the install information storage unit 140 may be independently a part of a BIOS (Basic Input Output System) ROM (Read Only Memory).

Several operating systems 111, 112, and 113 can be stored in the operating system storage unit 110 according to a user's language, version, and type of operating system. These operating systems (OS) do not directly drive the computer system 100, but are driven after being installed according to a predetermined procedure. Accordingly, the operating system storage unit 110 may be configured as install files for installing the operating systems.

The selection/installation unit 120 installs a specified operating system (OS) selected by a user among a plurality of operating systems (OS) stored in the operating system storage unit 110 in the computer system. The installation may include a typical software install process, and also a process of changing several files so that the previously installed operating system (OS) can run. That is, the operating system (OS) to be installed may be stored in the operating system storage unit 110, or several operating systems have been stored in advance and only the operating system (OS) selected by the selection/installation unit 120 can be installed, while other operating systems (OS) not selected are deleted so that they cannot be installed in the corresponding computer system. This deletion work can be accomplished by the deletion unit 130.

The selection/installation unit 120 can provide an interface which enables the user to select an operating system (OS) that the user desires or can use by showing a list of the operating systems 111, 112, and 113 stored in the operating system storage unit 110. In addition, the selection/installation unit 120 can store information about the selected operating system (OS) in the install information storage unit 140.

The deletion unit 130 deletes other operating systems stored in the operating system storage unit 110 which have not been selected by the selection/installation unit 120. If one of the operating systems is installed, the deletion unit 130 is configured to perform a process of deleting other operating systems not selected by a user. This is to prevent other operating systems from being used in the case where the cost for only one operating system (OS) has been paid during the purchase of a computer system. Accordingly, it is not required to install only one operating system; however, if the cost for two operating systems has been paid, for example, the two operating systems can be selected and installed in such a computer system, while other non-selected operating systems are deleted.

The install information storage unit 140 stores information about the type, version, or language of the operating system (OS) that has been installed. In order to install the operating system (OS) of the corresponding language or version by reason of a system restoration or reinstallation, information about the installed operating system (OA) is required. The install information storage unit 140 may be stored in a specified storage device of the computer system 100 so as to maintain the information even if the storage device is replaced by another storage media. For example, by storing the installation information in an information-maintaining space such as a ROM and a BIOS use area, the user can use the installation information even if the storage device of the system is restored or replaced by another storage media.

The booting operating system unit 160 provides a basic function for booting the computer system 100 in the case where no operating system is selected and installed during an initial booting of the computer system 100.

The driver/application software 150 may represent an embodiment of the software installation unit, used to install drivers or software that match the corresponding operating system (OS). Since the drivers or application software may differ according to the language or version of the installed operating system (OS), the software installation unit for installing the drivers corresponding to the operating system (OS) is required.

An external storage device connection unit 172 exchanges data in the case where the operating system storage unit 110 is stored in a detachable storage medium, such as a CD-ROM, a DVD-ROM, and a flash memory, instead of a hard disk installed in the computer system 100, and provides a communication function with external devices. A display control unit 174 displays a user interface through which a user can select a desired operating system using the selection/installation unit 120. An input unit 176 receives a user's input for selecting a specified operating system (OS). In the case of a PC and notebook computer, the input unit 176 receives the user's input, via a mouse, keyboard, and touch pad. In the case of a PDA (Personal Digital Assistant) or an HPC (Handheld Personal Computer), the input unit 176 receives the user's input, via a stylus pen. A control unit 170 exchanges data of the above-described components, and controls the components, including the external storage device connection unit 172, the display control unit 174, and the input unit 176.

The computer system as shown in Figure 1, includes a digital device that requires an operating system (OS) to be installed thereon, such as a PDA and a HPC, as well as a personal computer, notebook computer, and workstation.

Figure 1 illustrates that the respective components are stored in a storage device, but the present invention is not limited thereto. The respective components may be stored in a hard disk and flash memory, or separately stored in several storage media. For example, the selection/installation unit 120, the deletion unit 130, and the install information storage unit 140 may be stored separately from a hard disk and a flash memory, so that the user cannot easily detach them. Also, these respective components may be configured as a separate processor.

On the other hand, only the operating system storage unit 110, the selection/installation unit 120, and the booting operating system unit 160 as shown in Figure 1 may be stored in a single storage device in order to restore the system. The storage device may be one of diverse media such as a hard disk, a flash memory, a CD-ROM, and others. The operating system storage unit 110 in the storage device stores a plurality of operating systems 111, 112, and 113, as shown in Figure 1. The stored operating systems (OS) may be image files and install files.

The selection/installation unit 120 can determine what type or language of operating system (OS) is to be installed in accordance with the type of the operating system (OS) stored in the install information storage unit 140 in the computer system 100. The selection/installation unit 120 installs the same type or language of operating system (OS) as the previously installed operating system (100) to provide convenience to the user and to protect the software copyrights for other types or languages of operating systems.

The booting operating system unit 160 controls the booting of the computer system 100 until the selection/installation unit 120 selects and installs a specified operating system (OS).

As shown in Figure 1, the install information storage unit 140 is referred to before the operating system (OS) is installed, so that only a specified operating system (OS) is selected and installed among a plurality of operating systems provided together with a computer system 100. In the case of installing any operating system (OS) separately purchased by the user, it is not necessary for the user to refer to the install information storage unit 140.

On the other hand, to select specified operating systems and to make other non-selected operating systems not installed any further includes a case where one or more operating systems among a plurality of operating systems are installed. Accordingly, in the case of a computer system 100 where two or more operating systems are installed, the user can select and install two of N operating systems. This can be applied to a multi-OS system.

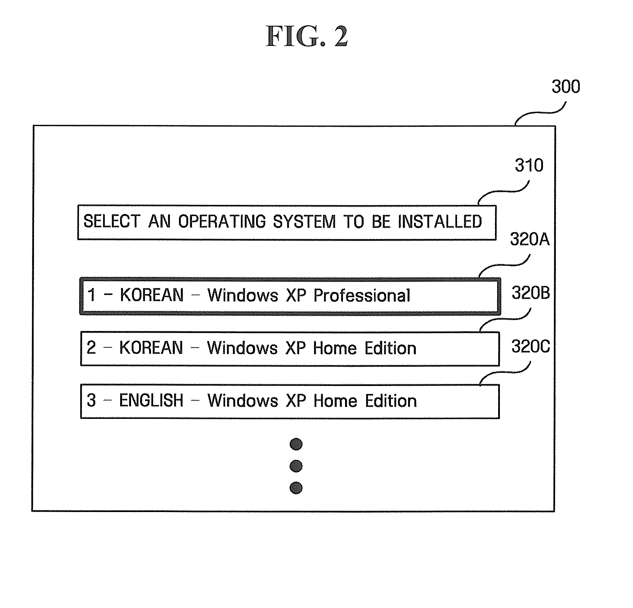

Figure 2 shows an example user interface that enables a user to select an operating system (OS) to be installed according to an embodiment of the present invention.

In the case where a computer system is initially booted or a restoration storage medium for restoring the computer system is mounted in the computer system, the selection/installation unit provides a visual display of an example user interface 300 as shown in Figure 2, via a display unit (not shown) through which a user can select and install an operating system (OS). The user interface 300 may provide a display bar 310 which requires a user to select and install an operating system (OS). A plurality of operating systems may include, for example, Windows XP Professional Version available in Korean 320A, Windows XP Home Edition available in Korean 320B, and Windows XP Home Edition available in English 320C. As previously discussed, however, different operating systems such as Apple Mac OS, NEXTSTEP, Unix, Linux, and others are also available. If the user selects a desired operating system (OS), for example, an English version of Windows XP Home Edition 320C, the selection/installation unit 120 installs the corresponding operating system (OS) 320C. In this case, the deletion unit 130 deletes other non-selected operating systems, such as, the Korean version of Windows XP Professional 320A and Windows XP Home Edition 320B.

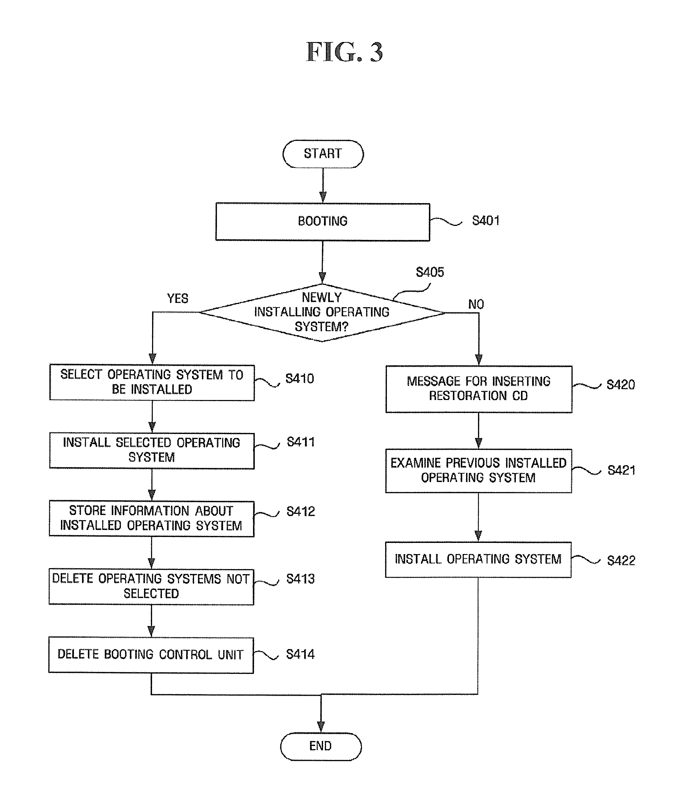

Figure 3 is a flowchart illustrating a process of installing an operating system (OS) according to an embodiment of the present invention.

A booting starts at operation S401. This booting is performed by the booting control unit 160 in a computer system 100, when the computer system 100 is first activated, or by the storage device for restoration when the computer system 100 needs to be restored. If the booting is completed, the control unit 170 determines whether there is a newly installed operating system at operation S405. In the case of installing a new operating system, an operating system (OS) to be installed is selected from a storage device such as a hard disk and flash memory at operation S410. In this case, the selection/installation unit 120 provides an example user interface as shown in Figure 2. Then, an operating system selected by the user is installed in the computer system at operation S411. If the installation is completed, information about the installed operating system is stored at operation S412, and the non-selected operating systems are deleted at operation S413. This is to prevent the non-selected operating systems from being installed later. Then, the booting control unit 160 is deleted at operation S414. If the operating system is installed, the booting is performed by the corresponding operating system, and thus the booting control unit 160 is not needed any more. On the other hand, if the booting control unit 160 is stored in a storage area such as a ROM, the booting control unit 160 is not deleted, but is prevented from leading the booting again. If the computer system 100 is required to be restored, the booting control unit 160 can be accessed to lead the booting again. Accordingly, the deletion of the booting control unit 160 is optional.

In the case of restoring the computer system 160 at operation S405, an insertion of a restoration CD can be reported at operation S420. At this time, if the booting is performed through the booting control unit 160 in the restoration CD, the booting control unit 160 can generate a message requesting an insertion of a restoration CD at operation S420. In the case of the restoration, information stored in the install information storage unit 140 is examined at operation S421. The corresponding operating system (OS) is installed depending on the version or language used in the operating system (OS), with reference to the information stored in the install information storage unit 140 at operation S422.

In the case of installing or restoring the operating system (OS) in the computer system 100 through a hard disk, the operating system (OS) installation process as shown in Figure 3 may be partly modified. First, the computer system 100 may be booted as shown in operation S401. Then, the stored multiple operating systems are displayed, and a user can select a desired operating system among the displayed operating systems as in shown in operation S410. Then, the operating system (OS) selected among the operating systems stored in the hard disk is installed, while the non-selected operating systems are deleted. Also, install information about the selected and installed operating system (OS) is stored.

The above-described process refers to a case where plural operating systems are installed in a storage device having a deletion function such as a hard disk and flash memory. In this case, the non-selected operating systems can be deleted from the storage device. In a restoration process, the non-selected operating systems may have already been deleted, and thus a process of deleting the non-selected operating systems and storing the install information may be omitted.

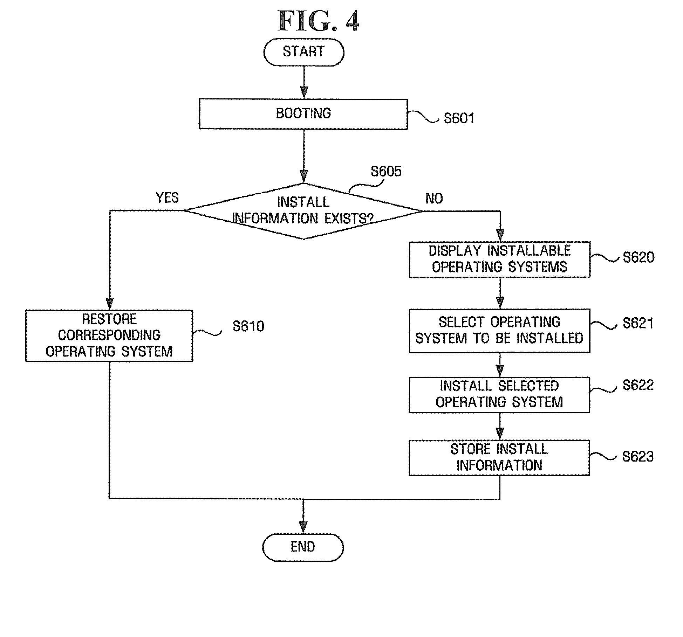

Figure 4 is a flowchart illustrating a process of installing or restoring an operating system in a computer system through a storage medium such as CD-ROM and a DVD according to another embodiment of the present invention. The operating system (OS) may be installed inside the computer system 100, such as a hard disk, or in a storage medium such as a CD-ROM and a DVD. The booting starts when a user of the computer system 100 inserts the storage medium into the computer system1 00, and in this case, the booting control unit 160 exists in the storage medium. In addition, the booting control unit 160 may be stored in a storage area such as a hard disk and a ROM, and in this case, a message requesting an insertion of a storage medium into the computer system 100 may be outputted. If the booting is completed, the control unit 170 determines whether the install information exists in the install information storage unit 140 at operation S605. If the install information exists in the install information storage unit 140, this indicates that the present process is a restoration process, and thus the operating system (OS) is restored at operation S610. The restoration of the operating system (OS) indicates that a part or all of operating system file corresponding to the stored install information is stored in the hard disk. This process may include a process of decompressing the compressed operating system install file.

On the other hand, in the case of newly installing an operating system (OS) instead of the restoration, installable operating systems stored in the storage medium are displayed at operation S620. When the user selects a desired language or type of an operating system (OS) among the listed operating systems at operation S621, the selection/installation unit 120 installs the selected operating system at operation S622. The selection/installation unit 120 may be stored in the storage medium or independently installed in the computer system 100. The operating system (OS) stored in the storage medium may be installed through a specified encryption process. Since it is not easy to delete the information stored in the storage medium such as a CD-ROM and a DVD unlike a hard disk and a flash memory, it is preferable to install the selected operating system (OS) through an encryption process, so that the non-selected operating systems are prevented from being installed through an unauthenticated method. Then, the information about the installed operating system is stored in the install information storage unit of the computer system 100 at operation S623.

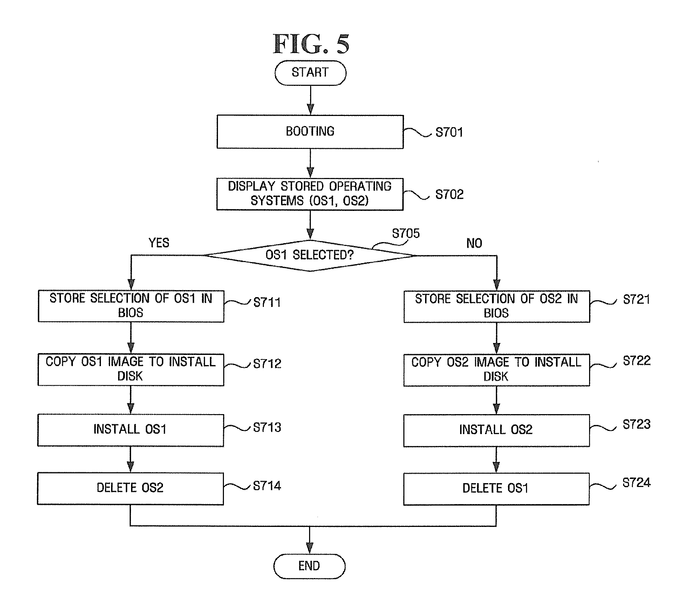

Figure 5 is a flowchart illustrating a process of selecting and installing one of two types of operating systems according to an embodiment of the present invention. The booting starts at operation S701, and the selection/installation unit 120, as shown in Figure 1, provides a visual display of stored operating systems at operation S702. In Figure 5, two operating systems, i.e., OS#1 and OS#2, are displayed. OS#1 and OS#2 may differ in accordance with their languages or versions. For example, in a computer system 100 distributed in Hong Kong, two operating systems based on English and Chinese languages may be provided as OS#1 and OS#2. In addition, Windows XP Pro or XP home edition, which differ according to their versions, may be provided as OS#1 and OS#2. If a user selects one of the two operating systems, a corresponding process is performed at operation S705. For example, if OS#1 is selected, the corresponding information is stored in BIOS that is an embodiment of the install information storage unit 140 at operation S711. Then, an OS#1 image is copied to an install disk at operation S712. This copy may be performed from two or more hard disks or specified directories of the hard disk to the install directory. Then, OS#1 is installed at operation S713. If the installation is completed, OS#2 that has not been selected is deleted so as to prevent the user from installing OS#2 again at operation S714.

If the user selects OS#2 at operation S705, the same process is performed. In this case, information about the selection of OS#2 is stored in BIOS at operation S721. Then, an OS#2 image is copied to the install disk at operation S722. Then, OS#2 is installed at operation S723. If the installation is completed, OS#1 that has not been selected is deleted so as to prevent the user from installing OS#1 again at operation S724.

As described above, according to the present invention, a user can select and install a necessary operating system among a plurality of operating systems. Particularly, in the case of distributing a computer system in a country where two or more languages are used, the user can directly select a desired operating system without the necessity of setting an individual computer system according to a user's language.

Also, since a plurality of operating systems can be collectively stored without the necessity of considering the preference of the operating systems during the manufacturing process of computer systems, and one of the operating systems can later be selectively installed by a user, the manufacturing efficiency can be enhanced.

Further, since only one operating system is actually installed and used by a user, the cost for providing a plurality of operating systems can be reduced, while satisfying users' preference.

Various components of the computer system 100, as shown in Figure 1, such as the selection/installation unit 120, the deletion unit 130, the driver/application software 150 and the booting control (operating system) unit 160 can be integrated into a control unit 170, or alternatively, can be implemented in software or hardware, such as, for example, an application specific integrated circuit (ASIC). As such, it is intended that the processes described herein be broadly interpreted as being equivalently performed by software, hardware, or a combination thereof. As previously discussed, software modules can be written, via a variety of software languages, including C, C++, Java, Visual Basic, and many others. These software modules may include data and instructions which can also be stored on one or more machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Instructions of the software routines or modules may also be loaded or transported into the wireless cards or any computing devices on the wireless network in one of many different ways. For example, code segments including instructions stored on floppy discs, CD or DVD media, a hard disk, or transported through a network interface card, modem, or other interface device may be loaded into the system and executed as corresponding software routines or modules. In the loading or transport process, data signals that are embodied as carrier waves (transmitted over telephone lines, network lines, wireless links, cables, and the like) may communicate the code segments, including instructions, to the network node or element. Such carrier waves may be in the form of electrical, optical, acoustical, electromagnetic, or other types of signals.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and subcombinations may be made to adapt the teachings of the present invention to a particular situation without departing from the scope thereof. Alternative embodiments of the invention can be implemented as a computer program product for use with a computer system. Such a computer program product can be, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or non-volatile, such as semiconductor, magnetic, optical or other memory device. Furthermore, the software modules as described can also be machine-readable storage media, such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; and optical media such as compact discs (CDs) or digital video discs (DVDs). Accordingly, it is intended, therefore, that the present invention not be limited to the various example embodiments disclosed, but that the present invention includes all embodiments falling within the scope of the appended claims.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A computer system (100) for selectively installing an operating system from a plurality of operating systems (111, 112, 113), the computer system (100) comprising:
an operating system storage unit (110) arranged to store a plurality of operating systems (111, 112, 113);
a selection/installation unit (120) arranged to select and install a specified operating system among the stored operating systems;
a deletion unit (130) to disable the operating systems not selected by the selection/installation unit (120) among the stored operating systems; and
an install information storage unit (140) arranged to store information about the installed operating system.

2. The computer system (100) as claimed in claim 1, further comprising a storage device arranged to restore the installed operating system in the computer system (100) with reference to the information stored in the install information storage unit (140) when the installed operating system of the computer system (100) is restored.

3. The computer system (100) as claimed in claim 1 or 2, wherein the deletion unit (130) deletes the operating systems not selected by the selection/installation unit (120).

4. The computer system (100) as claimed in claim 1, 2 or 3, further comprising a booting operating system unit (160) arranged to boot the computer system (100) until the selected operating system is installed in the computer system (100).

5. The computer system (100) as claimed in any of claims 1 to 4, wherein the selection/installation unit (120) provides a user interface for selecting one of the operating systems stored in the operating system storage unit (110).

6. The computer system (100) as claimed in any of claims 1 to 5, further comprising a software installation unit (150) arranged to install an application or a driver required for the operating system installed by the selection/installation unit (120).

7. The computer system (100) as claimed in any of claims 1 to 6, further comprising an input unit (174) arranged to receive an input from a user for selecting the operating systems.

8. A method of selectively installing an operating system from a plurality of operating systems (111, 112, 113), the method comprising:
(a) providing a storage medium in which a plurality of operating systems (111, 112, 113) are stored;
(b) selecting an operating system to be installed in a computer system (100) among the plurality of operating systems (111, 112, 113);
(c) installing the selected operating system in the computer system (100); and
(d) deleting the unselected operating systems among the plurality of operating systems (111, 112, 113).

9. The method as claimed in claim 8, further comprising installing the operating system among the plurality of operating systems (111, 112, 113) stored in the storage medium in order to restore the installed operating system.

10. The method as claimed in claim 8 or 9, further comprising storing information about the installed operating system.

11. The method as claimed in claim 8, 9 or 10, wherein the stored operating system is an image file or an install file for installing an operating system.

12. A method of selectively installing an operating system from a plurality of operating systems (111, 112, 113), the method comprising:
(a) preparing and providing a storage medium in which a plurality of operating systems (111, 112, 113) are stored;
(b) selecting an operating system to be installed in a computer system (100) among the plurality of operating systems (111, 112, 113);
(c) installing the selected operating system in the computer system (100); and
(d) setting that the unselected operating systems among the plurality of operating systems (111, 112, 113) could not be installed in the computer system (100).

13. A computer system (100), comprising:
a first storage unit (110) arranged to store a plurality of operating systems (111, 112, 113);
a second storage unit (140) arranged to store information regarding an installed operating system; and
a control unit (140) configured to enable a user to select and install a selected operating system among the operating systems, to disable all non-selected operating systems stored in the first storage unit (110), and to store information regarding the installed operating system in the second storage unit (140).

14. The computer system (100) as claimed in claim 13, wherein the control unit (140) is further configured to delete all non-selected operating systems when the selected operating system is installed in the computer system (100).

15. The computer system (100) as claimed in claim 13 or 14, further comprising a booting operating system unit (160) arranged to boot the computer system (100) until the selected operating system is installed in the computer system (100).

16. The computer system (100) as claimed in claim 13, 14 or 15, wherein the control unit (140) is further configured to provide a user interface for the user to select and install the selected operating system.

17. The computer system (100) as claimed in any of claims 13 to 16, further comprising a software installation unit (150) arranged to install an application or a driver required for operation with the installed operating system.

18. The computer system (100) as claimed in any of claims 13 to 17, further comprising an input unit (174) arranged to receive an input from the user for selecting and installing the selected operating system.

19. The computer system (100) as claimed in claim 15, wherein the first storage unit (110) is a hard disk, and wherein the control unit (140) is further configured to:
determine whether there is a newly installed operating system in the computer system (100) after an initial booting;
select and install the selected operating system from the first storage unit (110); store information regarding the installed operating system; and
delete all non-selected operating systems, and a boot program used to perform the initial booting.

20. The computer system (100) as claimed in claim 19, wherein, when there is no newly installed operating system in the computer system (100), the control unit (140) is further configured to generate a message requesting insertion of a restoration CD, examine a previously installed operating system, and installed a new operating system.

21. The computer system (100) as claimed in claim 15, wherein the control unit (140) is further configured to:
determine whether there is information regarding the installed operating system;
when there is information regarding the installed operating system, restore a corresponding operating system; and
when there is no information regarding the installed operating system, provide a visual display of all installable operating systems, select and install the selected operating system, and store the information regarding the installed operating system.

22. The computer system (100) as claimed in any of claims 13 to 21, wherein the operating systems include first and second operating systems, and wherein the control unit (140) is further configured to:
provide a visual display of the first and second operating systems stored in the first storage unit (110) after an initial booting;
determine if the first operating system is selected by a user;
if the first operating system is selected, store selection of the first operating system in a BIOS, copy an image of the first operating system to an install disk, install the first operating system and delete the second operating system; and
if the first operating system is not selected, store selection of the second operating system in the BIOS, copy an image of the second operating system to the install disk, install the second operating system and delete the first operating system.
